# DEMANDE DE BREVET EUROPEEN

(11) **EP 2 575 087 A2**
(43) Date de publication de la demande: **03.04.2013**
(21) Numéro de dépôt: 12186865.7
(22) Date de dépôt: 01.10.2012
(51) Int. Cl.: G06K 19/077, G06K 7/00

(54) **Dispositif de communication avec un transpondeur radiofréquence**

(30) Priorité: 30.09.2011 FR 1158872
(71) Demandeur: France Télécom, 75015 Paris (FR)
(72) Inventeur: Assadi, Houssem, 14000 Caen (FR); Levionnais, Philippe, 14000 Caen (FR); Pladeau, Bertrand, 14610 Thaon (FR)

(57) **Abrégé**

L'invention a trait à un dispositif de communication (4) destiné à échanger des données avec un transpondeur (3). Le transpondeur comprend classiquement une antenne (10) munie d'extrémités (10a, 10b) et un microcontrôleur (17) incluant une mémoire (11) réinscriptible. Le dispositif de communication (4) comporte des moyens de transmission (15) aptes à transmettre au moins une donnée (D) vers le transpondeur (3). Il comporte aussi des moyens de génération de génération de courant (14) pour alimenter en courant le microcontrôleur (17) de ce même transpondeur (3). Il comprend encore des moyens de connexion pour se connecter par contact électrique sur l'antenne (10) du transpondeur (3).

Il permet ainsi à un terminal de génération de données (5) d'écrire une donnée D dans la mémoire du transpondeur en utilisant ces contacts électriques.

## Description

### Domaine technique

L'invention se rapporte de manière générale aux télécommunications, et plus précisément aux communications sans contact utilisant des technologies radio à courte distance, notamment de type RFID (d'après l'anglais *Radio Frequency IDentification*)*.* Elle s'applique plus particulièrement au contrôle de dispositifs électromagnétiques comportant un microcontrôleur de communication en champ proche (en anglais *Near Field* - *NF*), que ces dispositifs soient passifs, actifs ou semi-actifs.

Les dispositifs en question sont désignés dans la suite par l'expression « transpondeurs ».

### Etat de la technique

Les communications en champ proche, usuellement appelées NFC (sigle de l'anglais « *Near Field Communication* »), basées principalement sur la norme ISO (de l'anglais « *International Standard Organisation* ») 14443, utilisent des technologies sans-fil pour permettre un échange d'informations entre deux périphériques éloignés d'une courte distance, typiquement inférieure à dix centimètres.

Une catégorie d'applications NFC, à laquelle s'applique l'invention, est celle où les périphériques sont respectivement un transpondeur et un terminal apte à lire des données dans le transpondeur. Cette catégorie se rapporte au *tag reading* tel que défini par le *Forum NFC* (association industrielle chargée de promouvoir la mise en oeuvre et la normalisation de la technologie NFC). Dans ce contexte applicatif, une communication NFC est établie entre un maître, ici appelé terminal, et un esclave, ici appelé transpondeur. Par exemple, le terminal est un téléphone mobile et le transpondeur une étiquette associée à un service. De tels services permettent d'accéder à toutes sortes d'informations dans le contexte d'applications de transport, de paiement, d'accès au réseau Internet, d'envoi d'un SMS ou d'un appel téléphonique, etc.

Les transpondeurs utilisés dans ce contexte possèdent une mémoire dans laquelle sont inscrites, lors de leur fabrication, des données relatives au transpondeur et optionnellement des données de service. Un problème se pose lorsque les données inscrites dans la mémoire d'un transpondeur doivent être modifiées ou lorsque de nouvelles données doivent être créées. De manière générale, un problème se pose lorsque des données sont à écrire dans la mémoire d'un transpondeur après sa fabrication.

Pour écrire de telles données dans ce transpondeur, il est aujourd'hui nécessaire de disposer d'un émetteur de type NFC et d'établir un couplage électromagnétique avec le transpondeur afin de contrôler le microcontrôleur du transpondeur et, par le biais de son microprocesseur, écrire dans sa mémoire. Cette opération est coûteuse, puisqu'il faut disposer d'un terminal équipé d'un module NFC et des programmes logiciels correspondants ; elle est, de plus, parfois difficile à mettre en oeuvre, car elle suppose une distance faible et une certaine précision d'approche entre le terminal et le transpondeur.

L'invention offre une solution ne présentant pas les inconvénients de l'état de la technique.

### L'invention

A cet effet, selon un aspect matériel, l'invention concerne un dispositif de communication destiné à échanger des données avec un transpondeur, ledit transpondeur comprenant une antenne et un microcontrôleur incluant une mémoire réinscriptible, ledit dispositif de communication étant **caractérisé en ce qu'il** comprend des moyens de connexion pour se connecter par contact électrique sur l'antenne du transpondeur, et en ce que ledit dispositif de communication comporte en outre des moyens de transmission aptes à transmettre au moins une donnée vers le transpondeur et des moyens de génération de courant pour alimenter en courant, par les contacts électriques des moyens de connexion, le microcontrôleur du transpondeur.

L'invention offre ainsi l'avantage de pouvoir modifier la valeur des données, par exemple des points de fidélité, dans la mémoire réinscriptible, sans utiliser un couplage électromagnétique. Le moyen de transmission du dispositif de l'invention transporte les données à écrire jusqu'au microcontrôleur du transpondeur, tandis que le générateur de courant l'alimente. Ainsi, tout se passe comme si le microprocesseur du transpondeur recevait une instruction d'écriture de données depuis un terminal NFC immergeant classiquement le transpondeur dans son champ électromagnétique, ces données parvenant au niveau de l'antenne pour prise en charge par le microprocesseur du transpondeur. Dans l'exemple qui va suivre, la transmission des données se fera également par contact électrique.

Dans le contexte de l'invention, le microprocesseur du transpondeur contrôle donc l'écriture des données dans la mémoire du transpondeur exactement de la même manière que si elles provenaient d'un terminal externe par un couplage électromagnétique. Ce mode de communication permet ainsi d'accéder à la mémoire du transpondeur via son microprocesseur en réutilisant un protocole de communication standard en champ proche. Cette méthode ne nécessite aucune modification, électrique ou mécanique, du transpondeur.

Selon un mode de mise en oeuvre particulier de l'invention, un tel dispositif de communication est en outre **caractérisé en ce qu'il** comporte des moyens de réception d'au moins une donnée E en provenance du transpondeur et des moyens de transmission aptes à transmettre au moins la donnée E vers un dispositif externe

Le dispositif est ainsi avantageusement bidirectionnel et offre la possibilité de lire les données qui se trouvent à l'intérieur de la mémoire du transpondeur afin de les afficher par exemple sur un dispositif de visualisation externe.

Selon un second mode de mise en oeuvre particulier de l'invention, qui pourra être mis en oeuvre alternativement ou cumulativement avec le précédent, un tel dispositif de communication est en outre **caractérisé en ce qu'il** comporte des moyens de détection d'une information d'accès à la mémoire du transpondeur et des moyens de transmission aptes à transmettre au moins l'information d'accès vers un dispositif externe.

Le dispositif est ainsi avantageusement apte à se positionner en espion vis-à-vis du transpondeur et à prévenir le terminal auquel il est connecté, par exemple celui du commerçant, que la mémoire du transpondeur a été accédée, typiquement lue, par un dispositif externe, typiquement le terminal du client.

Selon un troisième mode de mise en oeuvre particulier de l'invention, qui pourra être mis en oeuvre alternativement ou cumulativement avec le précédent, un tel dispositif de communication est en outre **caractérisé en ce que** le microcontrôleur du transpondeur est apte à être alimenté en courant par le biais d'un champ électromagnétique à une fréquence usuelle donnée et en ce que les moyens de génération de courant du dispositif délivrent une alimentation à ladite fréquence usuelle de fonctionnement dudit microcontrôleur du transpondeur.

Ainsi, avantageusement, le générateur de courant est adapté à alimenter le microcontrôleur du transpondeur à la fréquence usuelle de fonctionnement des communications NFC, c'est-à-dire à 13,56 Mhz. De cette manière, le couplage électromagnétique, qui génère une certaine tension et induit un certain courant dans le transpondeur, est remplacé par une alimentation correspondante en termes de tension et de courant induits.

Selon un autre mode de mise en oeuvre particulier de l'invention, qui pourra être mis en oeuvre alternativement ou cumulativement avec les précédents, un tel dispositif de communication est en outre **caractérisé en ce que** les moyens de transmission sont constitués de deux conducteurs aptes à transmettre la donnée vers le transpondeur et en ce que le moyen de génération de courant alimente le transpondeur via ces deux conducteurs.

Ainsi, un moyen de transmission très simple est assuré vers le transpondeur NFC pour écrire dans sa mémoire tout en l'alimentant, via deux conducteurs, par exemple deux fils électriques. Ce mode de mise en oeuvre de l'invention est particulièrement simple et astucieux puisqu'il permet de disposer d'un moyen d'écriture à la fois peu coûteux (seulement deux fils électriques et une alimentation en courant) et peu contraignant dans la distance d'écriture, puisque les fils peuvent être relativement longs alors que le couplage NFC ne fonctionne pas au-delà d'une dizaine de centimètres.

Selon une variante de ce mode de mise en oeuvre, un tel dispositif de communication est en outre **caractérisé en ce que** l'antenne du transpondeur comprend des extrémités et en ce que les deux conducteurs se connectent sur l'antenne au moyen d'un connecteur apte à établir le contact avec les extrémités de l'antenne.

Ainsi, une connectique très simple est assurée aux bornes du transpondeur NFC pour accéder à sa mémoire en lecture ou écriture tout en l'alimentant. Il n'est de cette manière pas nécessaire d'accéder au circuit du microcontrôleur du transpondeur, il est suffisant d'établir le contact aux extrémités de son antenne qui sont disponibles sans modification de la structure matérielle ou logicielle du transpondeur.

Selon un aspect fonctionnel, l'invention concerne également un procédé d'écriture dans un transpondeur, ledit procédé s'exécutant sur le microprocesseur d'un dispositif de communication, ledit transpondeur comprenant une antenne et un microcontrôleur incluant une mémoire réinscriptible, **caractérisé en ce qu'il** comporte les étapes de :
- activation d'un moyen de génération de courant;
- transmission du courant généré au transpondeur par contact électrique du dispositif sur l'antenne ;
- transmission d'au moins une donnée vers le transpondeur.

Selon un premier mode de mise en oeuvre du procédé d'écriture, qui pourra être mis en oeuvre alternativement ou cumulativement, le procédé d'écriture comporte en outre une étape de blocage de la mémoire du transpondeur de manière à interdire à un autre dispositif que le dispositif de communication un accès à la mémoire du transpondeur.

Ce mode de mise en oeuvre de l'invention permet avantageusement d'interdire la lecture de données dans le transpondeur, par exemple des points de fidélité, par un second terminal, tant que le premier terminal, par exemple celui du client auquel les points de fidélité sont attribués, n'a pas terminé sa lecture.

Selon un second mode de mise en oeuvre du procédé d'écriture, qui pourra être mis en oeuvre alternativement ou cumulativement, le procédé d'écriture comporte en outre une étape de mise à une valeur par défaut de la donnée D dans la mémoire du transpondeur.

Ce mode de mise en oeuvre de l'invention permet avantageusement d'invalider la valeur de la donnée D précédemment écrite, par exemple le nombre de points de fidélité, en l'écrasant par une valeur prédéfinie par défaut, par exemple zéro. Ainsi, si la donnée venait à être lue, après la lecture par le terminal du client, par un autre terminal qui tenterait de l'usurper, elle n'est plus valide.

Selon un second mode de mise en oeuvre du procédé d'écriture, qui pourra être mis en oeuvre alternativement ou cumulativement, le procédé comporte en outre une étape de détection d'au moins un accès à une donnée D dans la mémoire du transpondeur.

Selon un aspect fonctionnel, l'invention concerne également un procédé de lecture dans un transpondeur, ledit procédé s'exécutant sur le microprocesseur d'un dispositif de communication, ledit transpondeur comprenant une antenne et un microcontrôleur incluant une mémoire, **caractérisé en ce qu'il** comporte les étapes de :
- activation d'un moyen de génération de courant;
- transmission du courant généré au transpondeur par contact électrique du dispositif sur l'antenne ;
- réception d'au moins une donnée lue dans la mémoire du transpondeur.

Selon un autre aspect matériel, l'invention concerne également un terminal comprenant comportant un clavier, un écran et un dispositif de communication tel décrit ci-dessus.

Selon un autre aspect matériel, l'invention concerne également un programme d'ordinateur apte à être mis en oeuvre sur un dispositif tel que décrit ci-dessus, le programme comprenant des instructions de code qui, lorsque le programme est exécuté par un processeur, réalise les étapes du procédé défini ci-dessus.

L'invention sera mieux comprise à la lecture de la description qui suit, donnée à titre d'exemple et faite en référence aux dessins annexés.

Les figures:
La figure 1 représente schématiquement deux terminaux et un transpondeur selon l'état de la technique.
La figure 2a représente un système selon un mode de réalisation de l'invention.
La figure 2b représente le dispositif de l'invention selon une variante de ce mode de réalisation.
La figure 3 représente une configuration d'utilisation du dispositif de l'invention.
Les figures 4 et 5 représentent un exemple de connexion du dispositif de l'invention sur le transpondeur NFC standard de la figure 1.
La figure 6 représente un diagramme de l'invention selon ce mode de réalisation de l'invention.
Les figures 7a et 7b présentent des variantes d'un mode de réalisation de l'invention.

Description détaillée d'un exemple de réalisation illustrant l'invention

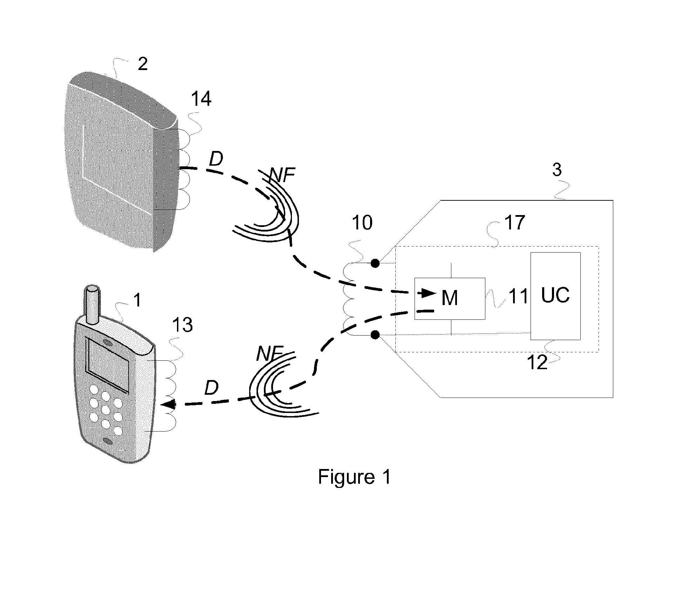

La figure 1 représente un système de l'état de l'art comprenant un terminal 1, un terminal 2 et un transpondeur 3. Le terminal 1 et le terminal 2 sont aptes à communiquer en champ proche via un champ électromagnétique (NF) avec le transpondeur 3.

Le terminal 1 est représenté ici, pour la compréhension générale de l'invention, sous la forme d'un téléphone mobile équipé d'un module NFC symbolisé par son antenne NFC 13. Le terminal 2 est représenté sous la forme d'une borne de lecture/écriture sans contact équipée d'un module NFC symbolisé par son antenne NFC 14. Les terminaux 1 et 2 sont représentés ici pour le contexte général mais ne font pas partie de l'invention.

Le transpondeur 3 est représenté comme une étiquette NFC. Une telle étiquette peut être affichée chez un commerçant et contient par exemple un nombre de points de fidélité à attribuer à un client, cette valeur devant être modifiée de façon dynamique en fonction du montant de l'achat. Le transpondeur 3 comporte une antenne NFC 10 et un microcontrôleur 17. Par microcontrôleur, on entend une structure à base de microprocesseur. Un tel microcontrôleur se présente généralement sous la forme d'un circuit intégré réunissant tous les éléments d'une structure à base de microprocesseur : la mémoire de données (RAM ou EEPROM), la mémoire de programme (ROM, EEPROM...), des interfaces parallèles ou série pour la connexion des entrées/sorties et le dialogue avec d'autres unités, des horloges... Sur la figure 1, pour des besoins de simplification, on a représenté uniquement les éléments essentiels à la compréhension de l'invention, à savoir une mémoire 11 (M) dans laquelle, selon le type du transpondeur, il est possible d'écrire une seule fois (en anglais, *read-only memory*) ou plusieurs (en anglais : *re-writable memory*) sous le contrôle du microprocesseur 12 (UC). On suppose que la mémoire M (11) est de type inscriptible, c'est-à-dire que l'on peut y écrire une fois, ou réinscriptible, c'est-à-dire que l'on peut y écrire plusieurs fois pour y changer les données mémorisées, par exemple le nombre de points de fidélité. De manière générale, on parlera de mémoire réinscriptible, étant entendu qu'une mémoire réinscriptible est une mémoire dans laquelle on peut écrire au moins une fois. Lors d'une communication NFC conventionnelle, le terminal 1 est apte à entrer, via son antenne NFC 13, en communication avec le transpondeur 3 lorsque l'utilisateur du terminal 1, par exemple un client équipé d'un téléphone mobile, s'en approche à moins de 10 cm. Le client peut alors lire, à l'aide de son terminal 1, la valeur d'une donnée D, par exemple le nombre de points de fidélité qui lui est attribué, stocké dans la mémoire 11 du transpondeur. La lecture se fait classiquement au moyen du protocole NFC.

On suppose ici qu'un commerçant, propriétaire du transpondeur 3 et du terminal 2, souhaite modifier une donnée, dans notre exemple le nombre D de points de fidélité, inscrite dans sa mémoire. Selon l'état de la technique connue, le commerçant doit, afin d'écrire le nombre de points de fidélité pour son client, approcher son terminal 2 du transpondeur 3 à moins de 10 cm. L'écriture se fait classiquement au moyen du protocole NFC.

Le terminal 2 et le terminal 1 réalisent respectivement l'écriture et la lecture du nombre D de points de fidélité en plongeant le transpondeur 3 dans un champ électromagnétique issu de leur module NFC. Lorsque le champ électromagnétique émis est suffisamment intense pour alimenter correctement le transpondeur 3, c'est-à-dire lorsque le transpondeur 3 est suffisamment proche du terminal 2 ou du terminal 1 pour être alimenté, une communication peut être établie selon le protocole NFC. En particulier, comme schématisé par les deux flèches en pointillé illustrant le cheminement des données du terminal 2 jusqu'au terminal 1, le terminal 2 du commerçant peut écrire la donnée D dans la mémoire M (11) du transpondeur 3 sous le contrôle du microprocesseur 12, et le terminal 1 du client peut ultérieurement lire la donnée (D) dans cette même mémoire M sous le contrôle de ce même microprocesseur 12.

Il est cependant coûteux et malaisé de réaliser l'opération d'écriture à l'aide d'un terminal (2) tel qu'une borne, ou un téléphone mobile professionnel équipé d'un émetteur NFC. Cette opération suppose en effet de disposer d'un tel terminal, équipé de modules matériels et logiciels pour la communication en champ proche, qui peut être coûteux. Elle contraint de plus le commerçant, qui peut être physiquement éloigné du transpondeur, à l'en approcher de manière conséquente. C'est pourquoi l'invention permet d'y substituer un équipement très simple, à bas coût, filaire, qui permettra d'écrire dynamiquement dans la mémoire du transpondeur tout en restant éventuellement à distance.

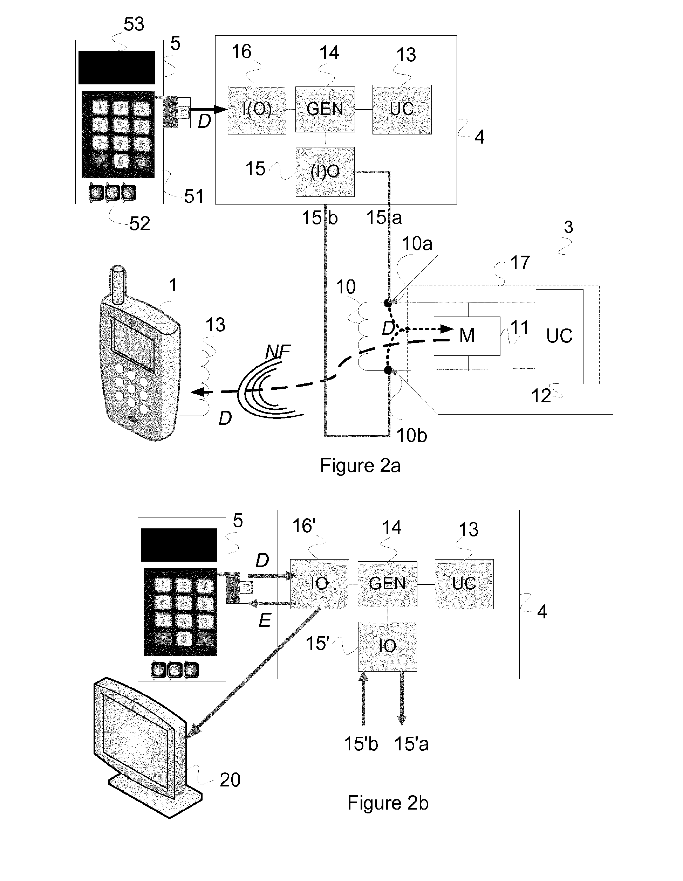

La figure 2a représente un système selon un mode de réalisation de l'invention, constitué du transpondeur 3 de la figure 1, du terminal 1 du client de la figure 1 et du dispositif 4 de l'invention selon ce mode de réalisation. Le terminal NFC 2 de la figure 1 est ici remplacé avantageusement par le dispositif 4 de l'invention associé à un module 5 de génération de données.

Dans cet exemple, le module 5 est un terminal très simple qui permet de saisir des données numériques sur un clavier 51, éventuellement de corriger puis valider la saisie à l'aide de touches de validation 52, et de les transmettre vers le dispositif 4 qui est apte à les recevoir et les retransmettre vers le transpondeur 3. Par exemple, le commerçant saisit sur le terminal 5 le nombre de points de fidélité qu'il souhaite inscrire dans la mémoire du transpondeur 3 et réalise un envoi vers le dispositif 4 selon un protocole série bien connu de type USB (de l'anglais *Universal Serial Bus*)*.* Selon un autre exemple, le dispositif 4 est relié directement au système de caisse qui lui transmet le nombre de points à créditer au client, cette valeur étant calculée par la caisse en fonction du montant de l'achat. Selon encore un autre exemple, le dispositif 4 est relié à la carte mère d'un ordinateur ou d'une passerelle domestique qui lui transmet des données.

Le dispositif 4 remplit exactement la même fonction que le terminal 2 de la figure 1, c'est-à-dire l'écriture de données, ici la donnée D, dans la mémoire 11 du transpondeur sous le contrôle du microprocesseur 12. Par la suite, le terminal 1 lit la donnée D dans la mémoire du transpondeur 3 de manière analogue à celle décrite à l'appui de la figure 1.

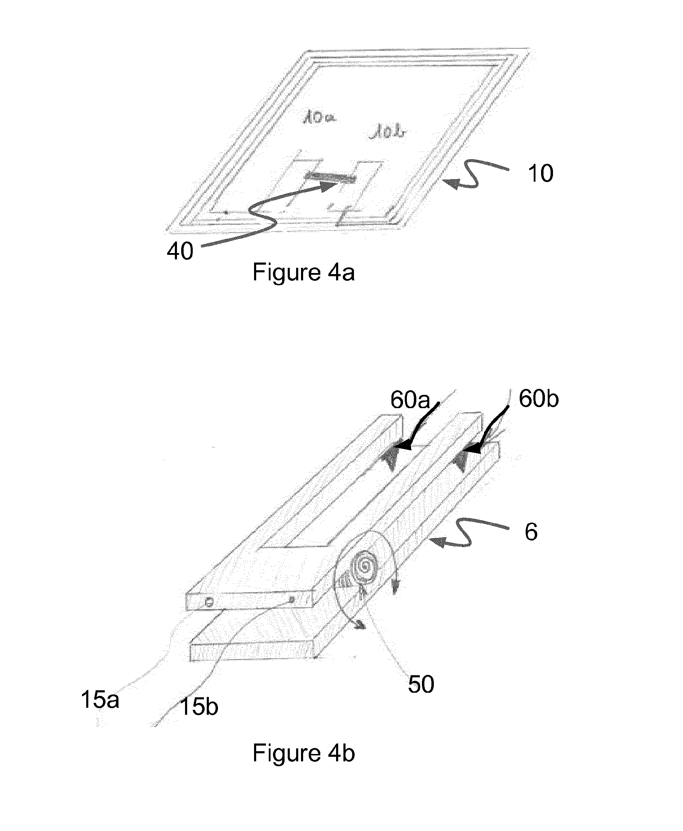

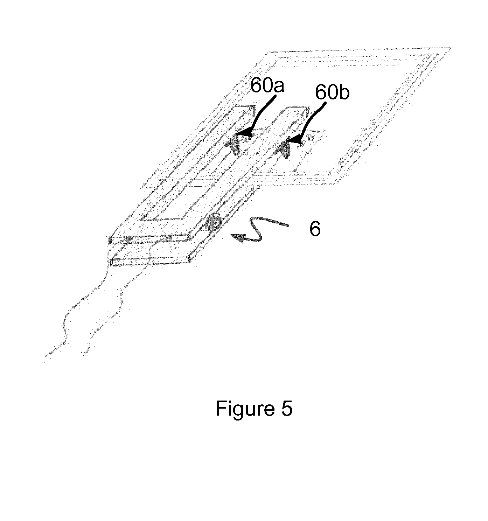

Le dispositif 4 de l'invention comporte un module de réception 16 qui lui permet de recevoir la donnée D de l'extérieur ; il comporte aussi un module 15 de transmission de données. Dans notre exemple, ce module est connecté au transpondeur 3 par une liaison filaire constituée de deux conducteurs, par exemple des fils électriques 15a et 15b, plus particulièrement aux points de connexion 10a et 10b de l'antenne 10 du transpondeur. Les deux fils électriques sont donnés à titre d'exemple, mais naturellement tout moyen de conduction des courants haute-fréquence connus de l'homme du métier pourra être utilisé de manière alternative. Comme il sera détaillé plus tard à l'appui des figures 4 et 5, les points de connexion 10a et 10b correspondent aux surfaces de connexion choisies, par exemple, près de la puce NFC du microcontrôleur (17) à la sortie de l'antenne.

Le terminal 4 comporte également un générateur de courant 14 délivrant une fréquence de 13,56 Mhz, c'est-à-dire une fréquence similaire à celle générée par un dispositif NFC standard, et donc apte à alimenter le microcontrôleur du transpondeur. Cette alimentation est transportée jusqu'aux bornes 10a et 10b de l'antenne NFC par la liaison filaire (15a, 15b). Le microcontrôleur 17 du transpondeur étant correctement alimenté, la communication selon le protocole NFC devient possible entre le dispositif 4 et le transpondeur 3. Pour le microprocesseur 12 du transpondeur 3, tout se passe en effet comme si le microcontrôleur 17 qu'il contrôle se trouvait alimenté par un champ électromagnétique répondant aux caractéristiques de la norme NFC. Ainsi, le microprocesseur peut-il réaliser l'écriture dans la mémoire M de la donnée D qui lui parvient par l'intermédiaire de la liaison filaire 15 exactement comme si elle lui provenait du terminal 2 de la figure 1 via un champ NFC. Il est donc possible, par ce biais, de faire parvenir la donnée D au transpondeur 3 selon un protocole standard, habituellement utilisé en technologie sans contact, tel que la norme 14443 de l'ISO.

Dans cet exemple, le terminal 4 comporte enfin, classiquement, un microprocesseur 13 apte à exécuter les instructions d'un programme logiciel lui permettant de piloter les composants d'entrée-sortie 15 et 16 et le générateur de courant 14.

Selon cet exemple de réalisation de la figure 2a, le dispositif 4 est supposé monodirectionnel, c'est-à-dire qu'il est prévu pour écrire des données (D) dans le transpondeur et non pas pour en recevoir en provenance du transpondeur. Selon une variante de réalisation, représentée à la figure 2b, le dispositif 4 peut être bidirectionnel. Il convient de le munir de modules d'entrée/sortie 15' et 16' bidirectionnels, c'est à dire que chacun d'entre eux peut indifféremment écrire ou recevoir des données. Il faut à cet effet que le générateur de courant soit associé à des composants classiquement connus de l'homme du métier, habituellement associés dans ces circonstances au générateur de courant pour exploiter la modulation de charge provoquée par le transpondeur quand il souhaite envoyer des informations au terminal 5. Ainsi, le dispositif 4 de l'invention selon cette variante peut-il recevoir des données E en provenance du transpondeur 3, et les transmettre à un dispositif externe, par exemple un écran de contrôle 20 connecté au dispositif 4 pour un affichage de ses données internes. Il convient, dans cette variante, d'alimenter correctement le transpondeur 3 via le générateur 14 avant toute lecture de donnée.

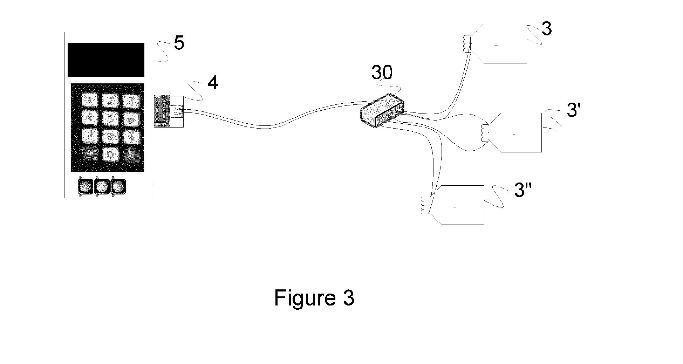

La figure 3 représente une configuration d'utilisation du dispositif de l'invention. Dans cette configuration, le dispositif 4 de l'invention, tel que décrit à l'appui des figures précédentes, est intégré dans un terminal 5. Comme indiqué auparavant, le terminal 5 est un dispositif très simple constitué d'un pavé numérique, d'un écran et de touches de validations, du type rencontré pour la saisie de codes confidentiels de carte à puce. A ce terminal très simple est adjoint le dispositif 4 de l'invention, schématisé ici sous la forme d'un petit circuit électronique inséré dans le terminal 5. Par exemple, il peut être intégré dans une fente (en anglais : *slot*) de lecture prévu à cet effet. Le terminal résultant de cette association est appelé dans la suite *terminal combiné* et noté (5-4).

Il est tout à fait envisageable, dans le cadre de l'invention, de connecter plusieurs transpondeurs (3, 3', 3") à un seul terminal combiné (5-4), comme représenté sur la figure 3. Le dispositif 4 est connecté à un répartiteur 30. Le répartiteur 30, dépourvu de capacités d'adressage, se contente de transmettre les données qui lui parviennent sur l'une des entrées vers la sortie, sur deux fils électriques connectés à leur autre extrémité au transpondeur 3, 3' ou 3" au niveau de son antenne, comme décrit à l'appui de la figure 2b. Les données émises par le terminal (5-4) sont ainsi acheminées vers les mémoires respectives des transpondeurs 3, 3' et 3".

Réciproquement, on pourrait envisager selon l'invention d'associer les terminaux combinés (5-4) en réseau, plusieurs terminaux étant connectés à un seul transpondeur.

Un mode de réalisation de la fixation d'un connecteur au transpondeur selon l'invention va maintenant être décrit à l'appui des figures 4a, 4b et 5.

Comme expliqué auparavant, le dispositif 4 de l'invention doit se connecter sur l'antenne du transpondeur afin de simuler un couplage électromagnétique et faire « croire » au transpondeur qu'il est immergé dans un champ magnétique de type NFC. Un tel transpondeur, accompagné de son antenne, est schématisé sur la figure 4a. Les proportions réelles étant sensiblement respectées pour ce qui concerne la topologie de l'antenne 10, on comprend que les deux extrémités de l'antenne 10a et 10b possèdent une surface suffisamment large pour accueillir le connecteur de l'invention tel qu'il va être maintenant décrit à l'appui de la figure 4b.

Le connecteur selon l'invention se présente sous la forme d'une pince conductrice 6 dont la partie supérieure accueille à l'une de ses extrémités les deux fils électriques 15a et 15b issus du dispositif 4 de l'invention, et à l'autre extrémité deux ergots 60a et 60b destinés à s'enficher dans les surfaces 10a et 10b de la figure 4a afin d'établir la connexion électrique. La partie supérieure de la pince est classiquement mobile par rapport à la partie inférieure grâce à un ressort de rappel 50. La distance 40 entre les deux extrémités 10a et 10b pouvant varier légèrement selon le type de transpondeur NFC, le connecteur selon l'invention comporte en outre un moyen, non représenté sur la figure, de faire varier la distance entre les deux ergots 60a et 60b. Ce moyen peut être par exemple mis en oeuvre par une composition flexible de la pince, ou par une articulation supplémentaire apte à rapprocher ou éloigner l'ergot 60a de l'ergot 60b, ou tout autre moyen classiquement à la portée de l'homme du métier. Selon une variante de réalisation, la double pince 6 à deux ergots pourra être remplacée par deux pinces simples à un seul ergot, l'une assurant la connexion du fil 15a et l'autre celle du fil 15b.

La figure 5 représente ce connecteur lorsqu'il est placé sur le transpondeur. Comme décrit auparavant, les ergots 60a et 60b de la pince du connecteur sont enfichées dans l'antenne au niveau des surfaces 10a et 10b, suite à une action de fermeture de la pince, assurant ainsi la connexion électrique nécessaire au bon fonctionnement de l'invention.

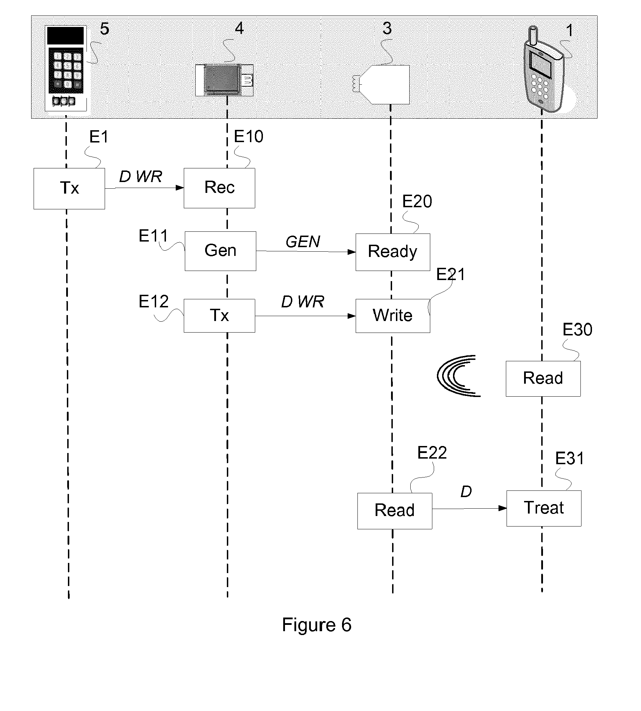

La figure 6 représente un datagramme pour cet exemple de mise en oeuvre de l'invention, illustrant les échanges entre le terminal d'écriture 5 du commerçant, le dispositif de l'invention 4 qui peut lui être combiné ou non, le transpondeur 3 et le terminal 1 du client de la figure 2b lorsque le commerçant écrit, via son terminal 5 , une donnée D dans le transpondeur à destination du terminal 1 du client.

Au cours d'une première étape E1, le commerçant saisit sur le clavier de son terminal5 la donnée D, dans notre exemple le nombre de points de fidélité, à écrire dans le transpondeur 3, puis valide éventuellement sa saisie au moyen d'une touche du clavier (par exemple une touche OK). Le dispositif 4 de l'invention reçoit alors la donnée D (E10) et entre dans une étape E11 au cours de laquelle il alimente le transpondeur via son générateur 14 (*GEM*)*.* Le transpondeur est alors prêt (E20) à recevoir des données. Le dispositif transmet la donnée D reçue (*D WR*) à la mémoire du transpondeur au cours d'une étape E12. Le transpondeur reçoit la donnée et l'écrit dans sa mémoire au cours d'une étape E21. Au cours d'une étape E30, le terminal 1 lit la donnée dans le transpondeur via un couplage électromagnétique (NF). Au cours d'une étape E22, la donnée D est classiquement acheminée de la mémoire du transpondeur vers le terminal 1 du client qui la traite au cours d'une étape E31.

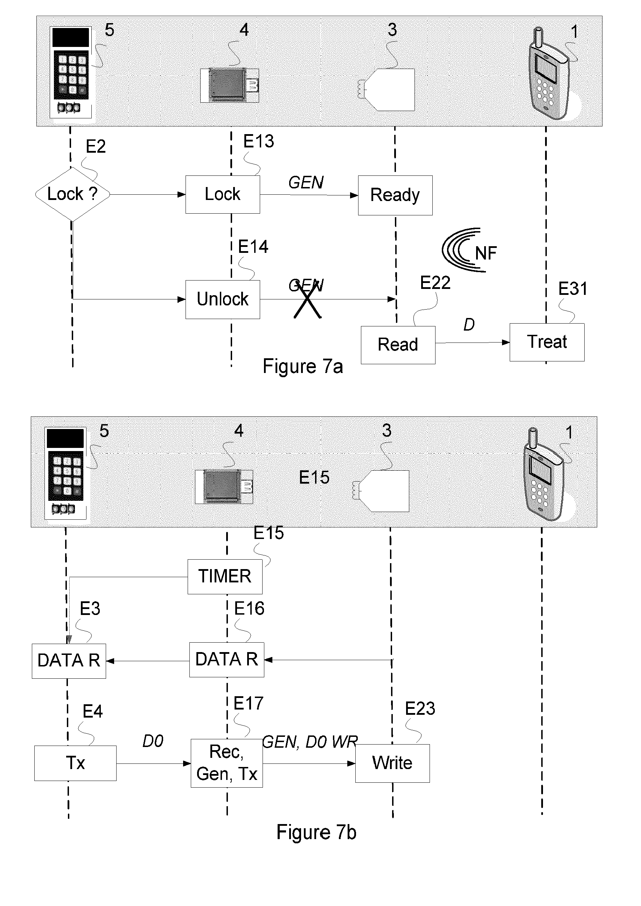

Les figures 7a et 7b illustrent des variantes d'un mode de réalisation de l'invention. Dans la première variante, présentée à la figure 7a, le terminal (5) peut décider au cours d'une étape E2 de bloquer l'accès à la mémoire du transpondeur 3. Si le blocage est souhaité, c'est-à-dire si la réponse à l'étape E2 est positive, il lui suffit de donner l'ordre au dispositif 4 de maintenir, comme représenté à l'étape E13, son alimentation électrique (*GEN*)*.* Cet ordre peut être par exemple initié par le commerçant qui enfonce une touche (par exemple une touche LOCK) sur le clavier du terminal 5. Pendant cette phase de maintien E13, si le terminal 1 tente une lecture au cours d'une étape E30, il ne pourra accéder à la mémoire du transpondeur.

De manière générale, dans cet exemple de réalisation, le programme implémenté sur le microprocesseur 13 du dispositif 4 donne une priorité à l'accès avec contact (filaire) vis-à-vis de l'accès sans contact. Tant que l'alimentation filaire est maintenue, il est donc aisé de bloquer l'accès à la mémoire via un champ électromagnétique. De plus cette priorité permet de gérer simplement les problèmes d'accès concurrentiels à la mémoire du transpondeur.

En revanche lorsque le dispositif 4 cesse d'alimenter le transpondeur (Etape E14), par exemple si le test de l'étape E2 est négatif, il devient alors possible de lire la mémoire depuis le terminal 1 via un couplage électromagnétique (NF). Au cours d'une étape E22, la donnée D est classiquement acheminée de la mémoire du transpondeur vers le terminal 1 du client qui la traite au cours d'une étape E31.

Dans la seconde variante, présentée à la figure 7b, le terminal (5) peut décider, au cours d'une étape E3, d'invalider la donnée D qui se trouve dans la mémoire du transpondeur. Cette décision peut faire suite à plusieurs événements, dont notamment :
- L'échéance d'une temporisation (étape E15) : par exemple, le terminal client dispose de 10 secondes pour lire sa donnée D. Lorsque les dix secondes sont écoulées, un programme implémenté dans le terminal 5 ou dans le dispositif 4 déclenche l'ordre d'invalidation.
- Au cours d'une étape E16, le dispositif 4, qui a pris connaissance, grâce à son microprocesseur, de la lecture de la donnée D par un terminal externe, peut remonter cette information vers le terminal 5. A cet effet, les circuits du dispositif 4 restent en écoute pour vérifier que la donnée a été lue dans le transpondeur 3. Le principe est conforme à celui d'une communication entre le transpondeur et le dispositif comme décrit à l'appui de la figure 2b.

Le terminal 5 écrit alors (E4) une donnée prédéfinie dans le transpondeur, par exemple la valeur zéro (*D0*)*,* en écrasant la donnée D précédemment écrite, afin qu'un autre client ne puisse plus la lire. La donnée invalidante (*D0*) est transmise au cours d'une étape E17 du dispositif 4 au transpondeur, qui l'inscrit dans sa mémoire au cours d'une étape E23 et efface du même coup la donnée D précédente. Alternativement, ou en complément de l'invalidation de la donnée en mémoire, on peut envisager que le terminal 5 soit programmé pour déclencher, lors de l'étape E4, une autre action comme par exemple l'émission d'un signal sonore ou lumineux ou la transmission d'ordres vers un ou plusieurs transpondeurs connectés en réseau comme sur l'exemple de la figure 3.

Bien entendu, la présente invention ne se limite pas au mode de réalisation décrit ici, d'autres variantes et modes de réalisation peuvent être déduits et mis en oeuvre par une personne du métier à la lecture de la présente description et des figures annexées.

## Revendications

1. Dispositif de communication (4) destiné à échanger des données avec un transpondeur (3), ledit transpondeur comprenant une antenne (10) munie de deux extrémités de connexion électriques (10a, 10b) et un microcontrôleur (17) incluant une mémoire (11) réinscriptible,
**caractérisé en ce que** ledit dispositif de communication (4) comprend des moyens de connexion (6), lesdits moyens étant agencés pour accueillir une liaison filaire comprenant deux conducteurs (15a-15'a, 15b-15'b) et pour établir un contact électrique (60a, 60b) entre lesdits conducteurs et les extrémités de l'antenne,
et **en ce que** ledit dispositif de communication (4) comporte en outre:
- des moyens de transmission (15) aptes à transmettre au moins une donnée (D) vers le transpondeur (3) ;
- des moyens de génération de courant (14) pour alimenter en courant, par les contacts électriques des moyens de connexion, le microcontrôleur (17) du transpondeur.

2. Dispositif de communication (4) selon la revendication 1 **caractérisé en ce qu'il** comporte en outre :
- des moyens de réception (15') d'au moins une donnée E en provenance du transpondeur ;
- des moyens de transmission (16') aptes à transmettre au moins la donnée (E) vers un dispositif externe (20).

3. Dispositif de communication (4) selon la revendication 1 **caractérisé en ce qu'il** comporte en outre :
- des moyens de détection (15') d'une information d'accès à la mémoire (11) du transpondeur ;
- des moyens de transmission (16') aptes à transmettre au moins l'information d'accès vers un dispositif externe (5).

4. Dispositif de communication selon la revendication 1 **caractérisé en ce que** le microcontrôleur (17) du transpondeur (3) est apte à être alimenté en courant par le biais d'un champ électromagnétique (NF) à une fréquence usuelle donnée et **en ce que** les moyens de génération de courant (14) du dispositif (4) délivrent une alimentation à ladite fréquence usuelle de fonctionnement dudit microcontrôleur (17) du transpondeur (3).

5. Dispositif de communication (4) selon la revendication 1 **caractérisé en ce que** les moyens de transmission (15) sont constitués des conducteurs (15a, 15b) et **en ce que** le moyen de génération de courant (14) alimente le transpondeur via ces deux conducteurs (15a, 15b).

6. Procédé d'écriture dans un transpondeur (3), ledit procédé s'exécutant sur le microprocesseur (13) d'un dispositif de communication (4), ledit transpondeur (3) comprenant une antenne (10) et un microcontrôleur (17) incluant une mémoire (11) réinscriptible, **caractérisé en ce qu'il** comporte les étapes de :
- activation (E11) d'un moyen de génération de courant (14);
- transmission (GEN) du courant généré au transpondeur (3) par contact électrique du dispositif (4) sur l'antenne (10) ;
- transmission (E12, E17) d'au moins une donnée (D, D0) vers le transpondeur (3).

7. Procédé d'écriture selon la revendication 6 **caractérisé en ce qu'il** comporte en outre une étape de blocage (E13) de la mémoire (11) du transpondeur (3) de manière à interdire à un autre dispositif (1) que le dispositif de communication (4) un accès à la mémoire (11) du transpondeur.

8. Procédé d'écriture selon la revendication 6 **caractérisé en ce qu'il** comporte en outre une étape (E17) de mise à une valeur par défaut (D0) de la donnée D dans la mémoire (11) du transpondeur (3).

9. Procédé d'écriture selon la revendication 6, **caractérisé en ce qu'il** comporte en outre une étape de détection d'au moins un accès à une donnée (D) dans la mémoire du transpondeur (3).

10. Procédé de lecture dans un transpondeur (3), ledit procédé s'exécutant sur le microprocesseur (13) d'un dispositif de communication (4), ledit transpondeur (3) comprenant une antenne (10) et un microcontrôleur (17) incluant une mémoire (11) réinscriptible, **caractérisé en ce qu'il** comporte les étapes de :
- activation (E11) d'un moyen de génération de courant;
- transmission (GEN) du courant généré au transpondeur par contact électrique du dispositif (4) sur l'antenne (10) ;
- réception d'au moins une donnée (E) lue dans la mémoire du transpondeur (3).

11. Terminal (5) comprenant comportant un clavier (51), un écran (53) et un dispositif de communication (4) selon la revendication 1.

12. Programme d'ordinateur apte à être mis en oeuvre sur un dispositif (4) tel que défini dans la revendication 1, le programme comprenant des instructions de code qui, lorsque le programme est exécuté par un processeur (13), réalise les étapes du procédé défini selon l'une des revendications 6 à 10.
